Europäisches Patentamt

European Patent Office

Office européen des brevets

(11) Veröffentlichungsnummer : **0 197 305**
**B1**

# (12) EUROPÄISCHE PATENTSCHRIFT

(45) Veröffentlichungstag der Patentschrift :
**17.08.88**

(21) Anmeldenummer : **86102954.4**

(22) Anmeldetag : **06.03.86**

(51) Int. Cl.⁴ : **H 01 G 4/30**

(54) **Elektrischer Kondensator und Verfahren zu seiner Herstellung.**

(30) Priorität : **22.03.85 DE 3510518**

(43) Veröffentlichungstag der Anmeldung :
**15.10.86 Patentblatt 86/42**

(45) Bekanntmachung des Hinweises auf die Patenterteilung : **17.08.88 Patentblatt 88/33**

(84) Benannte Vertragsstaaten :
**AT BE CH DE FR GB IT LI NL SE**

(56) Entgegenhaltungen :
**EP-A- 0 011 033**
**DE-A- 1 940 036**
**DE-A- 2 726 324**
**GB-A- 1 149 838**

(73) Patentinhaber : **Siemens Aktiengesellschaft Berlin und München**
**Wittelsbacherplatz 2**
**D-8000 München 2 (DE)**

(72) Erfinder : **Behn, Reinhard, Dipl.-Phys.**
**Frasdorferstrasse 6 d**
**D-8000 München 90 (DE)**
Erfinder : **Utner, Ferdinand**
**Roter Brachweg 99**
**D-8400 Regensburg (DE)**

**Beschreibung**

Gegenstand der Patentanmeldung gemäß EP-A2-0 144 857, die unter Art. 54(3) EPÜ fällt, ist ein elektrischer Kondensator aus einem verfestigten Stapel von mit je einer Metallschicht als Belegung versehenen, aneinandergeschichteten Dielektrikumslagen, bei dem die Belegungen von Lage zu Lage abwechselnd zu den Enden von zwei Vorsprüngen reichen, die durch einen Einschnitt entstanden sind, der in Richtung der Dicke des Stapels und etwa in der Mitte einer Seite desselben verläuft, bei dem ferner die von den Enden der Vorsprünge im verfestigten Stapel gebildeten Flächen mit zur Kontaktierung dienenden Metallschichten versehen sind, die die gegenpoligen Belegungen miteinander verbinden, mit den Merkmalen :

a) die Dielektrikumslagen bestehen aus Kunststoffolien,

b) die Belegungen bestehen aus regenerierfähig dünnen Schichten aus Ventilmetall und bedecken je eine Fläche der Dielektrikumslagen praktisch bis zu den Rändern an den Längsseiten sowie bis zu beiden Seiten der Vorsprünge und gegebenenfalls bis zum Rand der oberen Schmalseite des Stapels, der der den Einschnitt enthaltenen Schmalseite gegenüberliegt,

c) alternierend von Dielektrikumslage zu Dielektrikumslage sind die Vorsprünge mit metallfreien Isolierstreifen versehen, wobei die Tiefe des Einschnittes entweder größer ist als die Breite des Restmetallstreifens oder vorzugsweise mit den inneren Rändern der Isolierstreifen zusammenfällt oder über diese Ränder hinaus in den Stapel hineinreicht,

d) die die gegenpoligen Belegungen auf den Flächen miteinander verbindenden Metallschichten sind durch Metallspritzen hergestellt.

Der vorliegenden Erfindung, die sich auf einen solchen elektrischen Kondensator bezieht, liegt die Aufgabe zugrunde, die Haftung und Kontaktsicherheit der durch Metallspritzen hergestellten Metallschichten bei einem solchen Kondensator zu verbessern und einen Kondensator zu erhalten, der mechanisch stabil und einfach herstellbar ist und bei dessen Herstellung auch bisher bekannte Maßnahmen angewendet werden können.

Zur Lösung dieser Aufgabe ist der elektrische Kondensator der eingangs angegebenen Art erfindungsgemäß gekennzeichnet durch die weiteren Merkmale :

e) die Enden der Vorsprünge der jeweils ersten Dielektrikumslagen weisen infolge Wellenschnittkanten bei der Herstellung der dielektrischen Bänder enstandene Wellenberge und Wellentäler auf, während die Enden der Vorsprünge der jeweils zweiten Dielektrikumslagen durch Glattschnittkanten begrenzt sind,

f) die Dielektrikumslagen sind gegeneinander derart um einen Betrag seitlich versetzt, daß die Glattschnittkanten der Enden der zweiten Dielektrikumslagen etwa in der Mitte zwischen den Wellenbergen und den Wellentälern der Enden der ersten Dielektrikumslagen angeordnet sind,

g) an der oberen Schmalseite des Stapels weisen sowohl die ersten Dielektrikumslagen als auch die zweiten Dielektrikumslagen Glattschnittkanten auf.

Aus der GB-PS 811 983 ist es bekannt, bei elektrischen Kondensatoren mit einem Rundwickel die Ränder der mit Metallschichten versehenen Dielektrikumslagen an einer Seite mit einer Wellenschnittkante und an der anderen Seite mit einer Glattschnittkante zu versehen. Bei diesen Rundwickeln wird zwar diese Maßnahme, ebenso wie bei der vorliegenden Erfindung, eingesetzt, um die Haftfestigkeit der durch Metallspritzen aufgebrachten Metallschicht an den Stirnseiten zu erhöhen, jedoch hat der Rundwickel in sich eine ausreichende Stabilität, so daß diese Maßnahme hierfür nicht erforderlich ist und herstellungsbedingte Probleme nicht auftreten, weil bei den bekannten Kondensatoren an beiden Stirnseiten Wellenschnittkanten mit Glattschnittkanten abwechseln.

Bei Kondensatoren, die Gegenstand des eingangs genannten deutschen Patentes sind, tritt nämlich bei der Herstellung das Problem auf, daß die auf eine Trommel (auf ein Rad) aufzuwickelnden, mit Metallschichten versehenen Dielektrikumsbänder seitlich sehr exakt geführt werden müssen, damit der seitliche Verlauf so extrem gering als möglich bleibt, weil sonst die auf der Trommel aufzuwickelnden, aus mehreren Mutterkondensatorringen bestehenden Ausgangskondensatoren nicht stabil bleiben, so daß eine seitliche Führung erforderlich ist. Andererseits muß auch der Stapel, aus dem der elektrische Kondensator besteht, im fertigen Zustand mechanisch stabil sein. Diese Stabilität wird aber beeinträchtigt, weil die einzelnen Dielektrikumslagen an der oberen Schmalseite des Stapels nicht fest zusammengefügt sind und auch, weil gegebenenfalls die Kanten der Vorsprünge sämtlicher Dielektrikumslagen als Wellenschnittkanten ausgebildet sind.

Die Anwendung der aus der genannten GB-Patentschrift 811 983 bekannten Maßnahme bei Kondensatoren der eingangs angegebenen Art und der hier angegebenen Weise wird somit durch diese Patentschrift nicht nahegelegt.

Der Begriff « Wellenschnittkante » wird hier, ebenso wie in der genannten GB-PS 811 983, für jede Art von ungleichmäßiger Kantenbegrenzung benutzt, d.h. einfache Wellenschnitte einer Sinusfunktion mit unterschiedlicher Amplitude und-/oder unterschiedlicher Frequenz, ferner in beliebiger Weise ausgebildete Randbegrenzungen, wie sie beispielsweise in der EP-Al 0 011 033 beschrieben und gezeigt sind und wie dies ähnlich auch bereits in der DE-PS 24 16 566 dargestellt ist.

Eine bevorzugte Weiterbildung der Erfindung besteht darin, daß die Belegungen auf jeder oder wenigstens auf jeder zweiten Dielektrikumslage an der oberen Schmalseite des Stapels metallfreie Streifen als Isolierstreifen freilassen und daß auf der Schmalseite eine aufgeschoopte Metallschicht enthalten ist.

Dabei ist es vorteilhaft, wenn die Dielektrikumslagen an der genannten Schmalseite des Stapels um einen geringen Betrag gegeneinander versetzt sind, weil dadurch ein eventuell mögliches Aufblättern des Stapels noch besser verhindert wird.

Gegenstand des eingangs genannten Patentes ist ferner ein Verfahren zur Herstellung solcher elektrischer Kondensatoren, bei dem einseitig metallisierte Bänder aus Kunststoff als Dielektrikumslagen insbesondere mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutter-kondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, mit den Verfahrensschritten :

a) es werden metallisierte Bänder auf die Trommel gewickelt, die je an einem Rand gegebenenfalls durchgehende metallfreie Streifen aufweisen, während in den Bereichen der gegenüberliegenden Ränder und in Abständen hierzu in Wickelrichtung intermittierende metallfreie Isolierstreifen vor oder beim Aufwickeln derart erzeugt werden, daß die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinragen oder diesen Bereich geringfügig überschreiten,

b) die Bänder werden beim Aufwickeln auf die Trommel so geführt, daß die Mitten der Isolierstreifen des oberen Bandes symmetrisch über den Mitten der Zwischenräume zwischen den Isolierstreifen des unteren Bandes im fertigen Mutterkondensator angeordnet sind,

c) nach dem Aufwickeln und Verfestigen der Ausgangskondensatoren bzw. Mutterkondensatoren werden noch auf der Trommel zumindest die aus den Rändern gebildeten Stirnfläche durch Metallspritzen mit einer Metallschicht versehen,

d) nach dem Aufteilen in einzelne Mutterkondensatoren werden senkrecht zur Wickelrichtung in der Mitte zwischen je zwei Schneidlinien Einschnitte erzeugt, durch deren Breite und Tiefe die beiden Vorsprünge entstehen,

e) Abtrennen der einzelnen Kondensatoren, gegebenenfalls nach Befestigen der Stromzuführungen, durch Sägen, längs von Schneidlinien, die durch die Mitten der Isolierstreifen gehen,

f) Fertigstellung der Kondensatoren durch Anbringen von kappenförmigen Stromzuführungen oder von anderen Stromzuführungen, sofern diese nicht schon im Verfahrensschritt e) befestigt wurden.

Der vorliegenden Erfindung liegt die Aufgabe zugrunde, dieses Verfahren weiterzubilden, um auf besonders einfache Weise zu stabilen Kondensatoren mit gut haftenden Metallschichten zu gelangen.

Zur Lösung dieser Aufgabe ist das Verfahren der angegebenen Art erfindungsgemäß dadurch gekennzeichnet, daß ein erstes metallisiertes Kunststoffband mit Glattschnittkante an einem Rand und Wellenschnittkante am gegenüberliegenden Rand und ein zweites metallisiertes Kunststoffband mit Glattschitten wohl an einem Rand, als auch am gegenüberliegenden Rand mit seitlicher Versetzung um einen Betrag miteinander auf eine Trommel gewickelt werden, der gewährleistet, daß die Glattschnittkanten des unteren Bandes zwischen den Wellenbergen und den Wellentälern der Wellenschnittkante am Rand des oberen Bandes gelangt.

Vorzugsweise ist das Verfahren dadurch gekennzeichnet, daß auch auf die aus den Rändern der Bänder mit den Glattschnittkanten entstandene Stirnfläche des Ausgangskondensators, die im fertigen Kondensator die obere Schmalseite des Stapels bildet, eine Metallschicht aufgeschoopt wird.

Hierzu ist es ferner vorteilhaft, wenn auch diese Ränder der zu verwickelnden Kunststoffbänder um einen Betrag gegeneinander versetzt geführt werden.

Ein anderes Verfahren zur Herstellung elektrischer Kondensatoren der Erfindung geht auf Anspruch 9 in Verbindung mit Anspruch 8 des genannten Patentes zurück und sieht vor, daß einseitig metallisierte Bänder aus Kunststoff als Dielektrikumslagen insbesondere mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils ein Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, mit den Verfahrensschritten :

a) es werden metallisierte Bänder auf die Trommel gewickelt, die an beiden Rändern und in Abständen hierzu mit in Wickelrichtung intermittierenden metallfreien Isolierstreifen vor oder bei dem Aufwickeln derart versehen werden, daß die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinragen oder diesen Bereich geringfügig überschreiten,

b) die Bänder werden beim Aufwickeln auf die Trommel so geführt, daß die Mitten der Isolierstreifen des oberen Bandes symmetrisch über die Mitten der Zwischenräume zwischen den Isolierstreifen des unteren Bandes im fertigen Mutterkondensator angeordnet sind,

c) nach dem Aufwickeln und Verfestigen der Ausgangskondensatoren bzw. Mutterkondensatoren werden noch auf der Trommel auf beide aus den Rändern gebildete Stirnflächen durch Metallspritzen Metallschichten aufgetragen,

d) nach dem Auftrennen in einzelne Mutterkondensatoren werden senkrecht zur Wickelrichtung in der Mitte zwischen je zwei Schneidlinien an beiden Seiten Einschnitte erzeugt, durch deren Breite und Tiefe die Beiden Vorsprünge entstehen,

e) Abtrennen der einzelnen Kondensatoren, ggf. nach Befestigen von Stromzuführungen, durch Sägen sowohl längs von Schneidlinien, die durch die Mitten der Isolierstreifen gehen, als auch längs einer Schneidlinie, die parallel zu den Rändern in der Mitte des Mutterkondensators liegt,

f) Fertigstellung der Kondensatoren durch Anbringen von kappenförmigen Stromzuführungen oder von anderen Stromzuführungen, sofern diese nicht schon im Verfahrensschritt e) befestigt wurden.

Die Weiterbildung dieses Verfahrens ist gemäß der vorliegenden Erfindung dadurch gekennzeichnet, daß von den zu verwickelnden metallisierten Kunststoffbändern das obere Band an einem Rand eine Glattschnittkante und am gegenüberliegenden Rand eine Wellenschnittkante aufweist, während das untere Band entgegengesetzt zum oberen Band an einem Rand eine Wellenschnittkante und am gegenüberliegenden Rand eine Glattschnittkante aufweist.

Die Bänder werden vorzugsweise beim Wickeln auf die Trommel gegeneinander seitlich derart um einen Betrag versetzt geführt, daß die jeweiligen Glattschnittkanten mittig zwischen die Wellenberge und Wellentäler der Wellenschnittkante gelangen.

Eine etwas abgewandelte Variante dieses Verfahrens ist erfindungsgemäß dadurch gekennzeichnet, daß von den zu verwickelnden metallisierten Kunststoffbändern das obere Band an beiden Rändern mit Glattschnittkanten versehen ist, das untere Band an beiden Rändern Wellenschnittkanten enthält und, gemessen von Wellenberg zu Wellenberg, um das doppelte des Betrages der Versetzung breiter ist, als das obere Band.

Die Erfindung wird nachfolgend anhand der beigefügten Figuren erläutert.

Er zeigen :

Fig. 1 einen Kondensator nach der Erfindung mit Stromzuführungsdrähten,

Fig. 2 einen Kondensator nach der Erfindung für den Einbau in Chipbauweise,

Fig. 3 schematisch einen teilweise zerlegten Kondensator nach der Erfindung,

Fig. 4 einen Schnitt durch zwei miteinander zu verwickelnde Kunststoffbänder längs der Linie IV-IV in Fig. 5,

Fig. 5 einen Ausschnitt aus zwei übereinanderliegenden und miteinander zu verwickelnden Bänder,

Fig. 6 eine andere Ausführungsform für zwei übereinander zu verwickelnde Bänder im Schnitt längs der Linie VI-VI in Fig. 7,

Fig. 7 zwei übereinander gelegte und miteinander zu verwickelnde Kunststoffbänder für die andere Herstellungsvariante des Verfahrens der Erfindung und

Fig. 8 einen weiteren Schnitt durch zwei miteinander zu verwickelnde Kunststoffbänder.

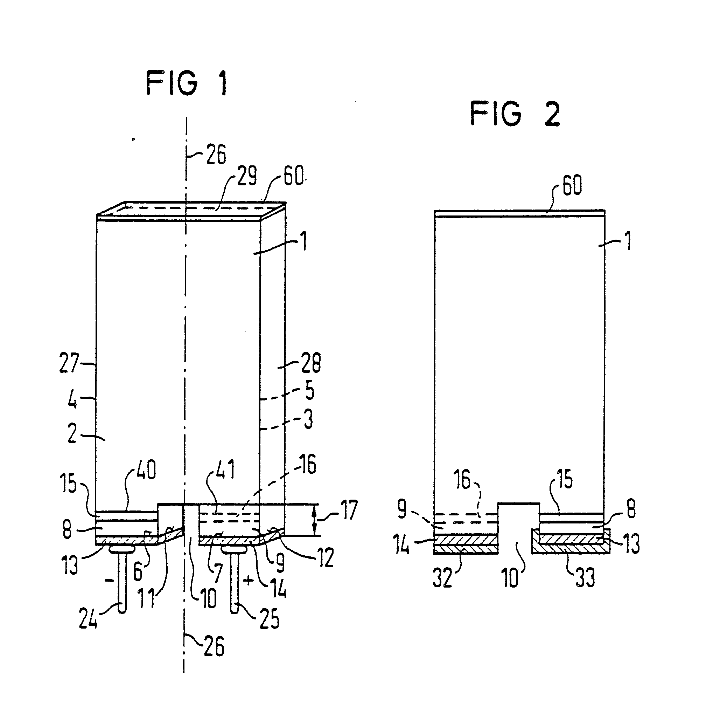

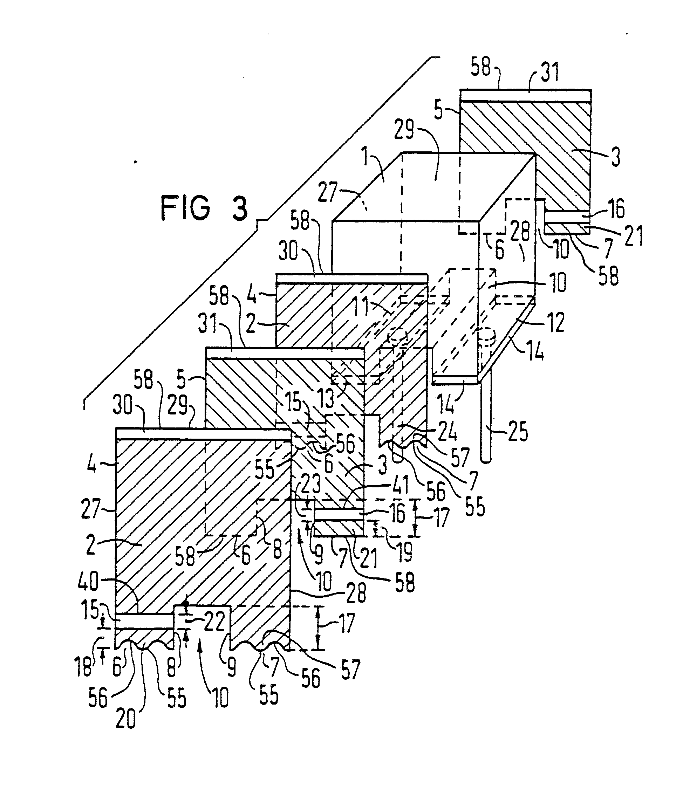

Der elektrische Kondensator gemäß Fig. 1 besteht aus einem verfestigten Stapel 1 aus einer Vielzahl von Dielektrikumslagen 4 und 5, die mit Belegungen 2 und 3 versehen sind. Durch einen Einschnitt 10 in Richtung der Dicke des Stapels 1, d.h. senkrecht zu den Dielektrikumslagen 4 und 5, weisen dieselben Vorsprünge 8 und 9 auf, deren Enden 6 und 7 im verfestigten Stapel 1 Flächen 11 und 12 bilden. Auf diesen Flächen sind Metallschichten 13 und 14 aufgetragen, die die bis zu den Enden 6 und 7 reichenden Belegungen miteinander verbinden. Die Belegung 2 auf der Dielektrikumslage 4 ist durch einen metallfreien Isolierstreifen 15 nicht mit der Metallschicht 13 verbunden, während die Belegung 3 auf der Dielektrikumslage 5 durch den metallfreien Isolierstreifen 16 mit der Metallschicht 14 nicht verbunden ist. Dies setzt sich alternierend durch den gesamten Stapel 1 hindurch fort, wie es in Fig. 3 gezeigt ist.

An den Metallschichten 13 und 14 sind Stromzuführungsdrähte 24 und 25 befestigt, beispielsweise durch Löten oder Schweißen.

Die Tiefe 17 des Einschnittes 10 in Richtung der Längsachse 26 des Stapels 1 reicht mindestens bis über die Restmetallstreifen 20 und 21 (Fig. 3) oder bis zu den inneren Rändern 40 und 41 der Isolierstreifen 15 und 16. Vorteilhafterweise überragt die Tiefe 17 in diese inneren Ränder 40 und 41 der Isolierstreifen 15 und 16.

Die Belegungen 2 und 3 auf den Dielektrikumslagen 4 und 5 reichen bis zu den Längsseiten 27 und 28 und gegebenenfalls auch bis zur Schmalseite 29. Zur Erzielung einer ausreichenden Isolation zwischen den Belegungen 2 und 3 dienen die in den DE-PSen 1 764 548, 1 764 549 und 2 526 130 erläuterten Maßnahmen. Dies gilt auch für die sich im Schnitt 10 ergebenden Flächen, denn auch dort ist eine erhöhte Isolation erforderlich.

Da die elektrischen Kondensatoren gemäß der Erfindung in bekannter Weise vor ihrer Fertigstellung zum Zwecke der Regenerierung von Fehlstellen an eine Spannung gelegt werden, die oberhalb der späteren Einsatzspannung liegt, können Stellent ungenügender Isolation in den angegebenen Schnittflächenbereichen ebenfalls ausheilen, d.h.

regenerieren, und damit die notwendige Isolation der Schnittflächen gewährleisten.

In Fig. 2 sind für Teile, die denen in Fig. 1 entsprechen, gleiche Bezugzeichen verwendet. Anstelle von Stromzuführungsdrähten 24 und 25 ist der Kondensator nach Fig. 2 jeweils an beiden aus den durch den Einschnitt 10 entstandenen Vorsprüngen 8 und 9 gebildeten Füßen entweder mit Stromzuführungen 32 in Form von Metallschichten oder mit Stromzuführungen 33 in Kappenform versehen, wobei die Kappen den Fuß teilweise umschließen. Beide dieser Ausführungsformen der Stromzuführungen dienen für den Einbau des Kondensators als Chip. Bei Stromzuführungen 32 in Form von Metallschichten steht der Kondensator auf den Kontaktierungsstellen der gedrucken Schaltung und ist daran angelötet, während bei Stromzuführungen 33 in Kappenform der Kondensator auch liegend auf der gedruckten Schaltung eingebaut werden kann.

Beim Kondensator gemäß Fig. 3 sind die zum Stapel 1 gehörenden ersten drei und die letzte Dielektrikumslage herausgehoben gezeichnet. Die Belegungen 2 und 3 auf den Dielektrikumslagen 4 und 5 reichen auch hier bis zu den beiden Längsseiten 27 und 28 des Stapels 1, sie können auch bis zur Schmalseite 29 reichen, im vorliegenden Ausführungsbeispiel sind jedoch längs der oberen Schmalseite 29 des Stapels 1 metallfreie Streifen 30 und 31 gezeigt.

Durch den Einschnitt 10 sind Vorsprünge 8 und 9 mit Enden 6 und 7 entstanden. Auf den Dielektrikumslagen 4 reicht die Metallbelegung 2 bis zum Ende 7 des Vorsprunges 9, während auf den Dielektrikumslagen 5 die Belegung 3 bis zum Ende des Vorsprunges 8 reicht. Alternierend von Dielektrikumslage 4 zu Dielektrikumslage 5 sind auf den Vorsprüngen 8 bzw. 9 metallfreie Streifen 15 bzw. 16 angeordnet, so daß Restmetallstreifen 20 bzw. 21 verbleiben. Die Tiefe 17 des Einschnittes 10 sollte mindestens die Breite 18 bzw. 19 der Restmetallstreifen 20 und 21 überragen, vorzugsweise reicht die Tiefe 17 bis zu den inneren Rändern 40 bzw. 41 der metallfreien Isolierstreifen 15 bzw. 16 oder ragen etwas über die inneren Ränder hinaus. Mit anderen Worten ist die Tiefe des Einschnittes größer als die addierten Bereiche 18 bzw. 19 und 20 bzw. 23 der Restmetallstreifen 20 bzw. 21 und der metallfreien Isolierstreifen 15 bzw. 16. Bei der Tiefe des Einschnittes 10 ist auch die Dicke der Metallschichten 13 und 14 zu beachten, die sich auf den durch die Enden 6 und 7 der Vorsprünge 8 und 9 gebildeten Flächen 11 und 12 befinden.

Die Enden 6 und 7 der Dielektrikumslagen 4 weisen jeweils eine aus Wellenbergen 55 und Wellentälern 56 bestehende Wellenschnittkante 57 auf. Dagegen haben die Enden 6 und 7 der Vorsprünge 8 und 9 der Dielektrikumslagen 5 jeweils Glattschnittkanten 58. Die abwechselnde Anordnung von Dielektrikumslagen 4 mit Wellenschnittkanten und Dielektrikumslagen 5 mit Glattschnittkanten an den Enden 6 und 7 der Vorsprünge 8 und 9 ist wesentlicher Bestandteil der vorliegenden Erfindung, ebenso wie das Vorhandensein von Glattschnittkanten 58 an allen Dielektrikumslagen 4 und 5 an den gegenüberliegenden Rändern, die die Schmalseite 29 im verfestigten Stapel 1 bilden.

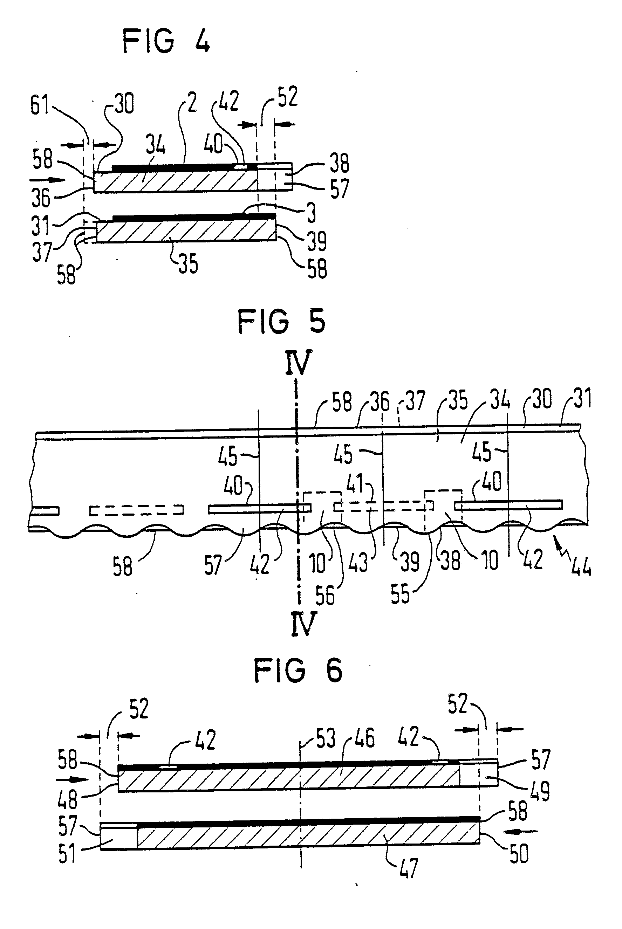

Die erfindungsgemäßen Verfahren zur Herstellung der Kondensatoren der Erfindung werden nachfolgend anhand der Figuren 4 bis 8 erläutert.

Die Figuren 4 und 5 zeigen zwei miteinander auf eine Trommel (oder ein Rad) aufzuwickelnde, mit Metallschichten als Belegungen versehene Kunststoffbänder 34 und 35.

Fig. 4 zeigt dabei einen Schnitt längs der Linie IV-IV in Fig. 5.

Die Belegung 2 reicht bis zum rechten Rand 38 und ist mit dem Isolierstreifen 42 versehen, der im fertiggestellten Kondensator die Belegung 2 vom Rand 38 abtrennt, so daß sie nur bis zum inneren Rand 40 des Isolierstreifens 42 reicht. Gleiches gilt für die Belegung 3 auf dem unteren Band 35, die durch den Isolierstreifen 43 im fertigen Kondensator nur bis zum inneren Rand 41 reicht.

Der Rand 38 des Bandes 34 ist mit einer Wellenschnittkante 57 versehen, während der Rand 36 eine Glattschnittkante 58 aufweist.

Die Glattschnittkanten 58 an den Rändern 36 und 37 dienen zum Führen der Bänder 34 und 35 während des Wickelvorganges. Das Band 35, das mit der Belegung 3 versehen ist, weist an seinem Rand 39 ebenfalls eine Glattschnittkante 58 auf. Während des Wickelvorganges sind die beiden Bänder gegeneinander derart versetzt, daß die Glattschnittkante 58 etwa in die Mitte zwischen die Wellenberge 55 und die Wellentäler 56 gelangt. Der Betrag der seitlichen Versetzung 52 berücksichtigt dieses Erfordernis und beträgt in der Praxis etwa 0,05 bis 0,2 mm. Er ist ferner auch von der Amplitude des Wellenschnittes der Wellenschnittkante 57 abhängig.

In der Nähe der Ränder 36 und 37 sind metallfreie Streifen 30 und 31 vorgesehen, die dazu dienen, an dieser Stirnseite des späteren Kondensators eine ausreichende Isolation zu gewährleisten, weil ein Sägevorgang an dieser Stirnseite nicht erfolgt. Zur Verfestigung des Stapels kann auf diese Stirnseite, die im späteren Kondensator die Schmalseite 29 des Stapels 1 darstellt, eine Metallschicht 60 (Fig. 1 und 2) aufgetragen sein. Zur besseren Verankerung der Metallschicht 60 an dieser Stirnseite empfiehlt es sich, auch die Ränder 34 und 35 gegeneinander um einen Betrag 61 zu versetzen, der gewährleistet, daß dennoch ein elektrischer Kontakt zwischen der Metallschicht 60 und den Metallschichten 2 und 3 nicht entsteht. Dabei würde aber ein elektrischer Kontakt mit gleichpoligen Belegungen, also stets mit den Belegungen 2 oder stets mit den Belegungen 3, nicht stören.

In Fig. 5 sind gestrichelt ferner noch die später anzubringenden Einschnitte 10 angedeutet.

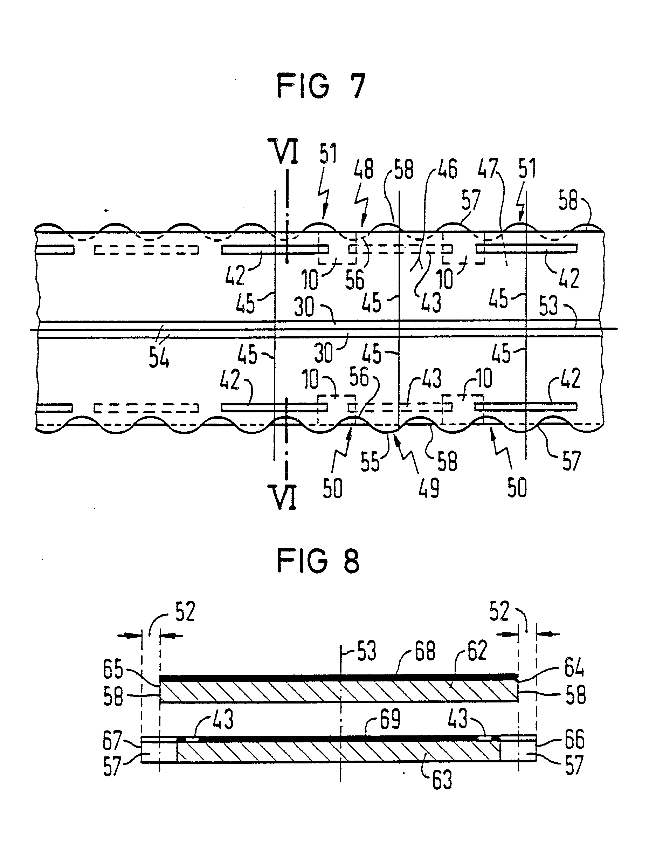

Die Figuren 6 und 7 stellen eine andere Ausführungsform für ein Verfahren zur Herstellung der Kondensatoren nach der Erfindung dar. Fig. 6 ist dabei ein Schnitt längs der Linie VI-VI in Fig. 7.

Bei diesem Verfahren werden zwei Kunststoffbänder 46 und 47 miteinander verwickelt, wie es im Europäischen Patent gemäß EP-A2- 0 144 857 im Anspruch 9 in Verbindung mit Anspruch 8 und im Zusammenhang mit der dortigen Figur 6 beschrieben ist.

Die mit Metallisierungen versehenen Kunststoffbänder 46 und 47 weisen jeweils abwechselnd an den Rändern 48 bzw. 50 jeweils eine Glattschnittkante 58 auf. An den jeweils gegenüberliegenden Rändern 49 bzw. 51 sind Wellenschnittkanten 57 vorhanden. Auf diese Weise wechseln im fertigen Kondensator, der durch einen Sägeschnitt längs der Linie (53) entsteht, Wellenschnittkante 57 und Glattschnittkante 58 einander ab.

Der Betrag 52 der seitlichen Versetzung ist hierbei nach den gleichen Gesichtspunkten gewählt, wie es bei Fig. 4 beschrieben ist, damit die Belegungen sowohl an den Wellenschnittkanten 57, als auch an den Glattschnittkanten 58 auf der Fläche und nicht nur an ihrem seitlichen Rand kontaktiert werden. Die Wellenberge 55 ragen nämlich über den Rand der Stirnfläche etwas hinaus und bieten deshalb dort eine gute flächenhafte Kontaktierungmöglichkeit, während die Wellentäler 56 Flächenbereiche der Belegungen des unteren Bandes für eine flächenhafte Kontaktierung freilassen.

Nach dem Aufwickeln dieser beiden Bänder auf die Trommel zur Herstellung eines aus mehreren Mutterkondensatorringen bestehenden Ausgangskondensators wird dieser an den Stirnflächen mit Metallschichten versehen, dann in die einzelnen Mutterkondensatorringe aufgeteilt, in die dann von beiden Seiten her die Einschnitte 10 erzeugt werden. Vor oder nach diesem Vorgang werden die Mutterkondensatoren längs den Schneidlinien 53 und 45 durch entsprechendes Sägen - wie oben beschrieben - in einzelne Stapel aufgeteilt, die dann weiterverarbeitet werden, wie es oben beschrieben ist.

Die Belegungen auf den beiden Bändern 46 und 47 können über die Mitte hinaus durchgehend sein, denn durch den Sägevorgang wird dort, gegebenenfalls zusammen mit Regeneriervorgängen, ein ausreichende Randisolation erzielt.

Es ist aber auch möglich, in der Mitte einen metallfreien Isolierstreifen anzuordnen, durch den hindurch die Schneidlinie 53 geht, so daß dann die metallfreien Streifen 30 und 31 an der Schmalseite 29 des Stapels 1 entstehen, wie dies im Zusammenhang der Figuren 1 bis 3 erläutert ist.

Eine andere Ausführungsvariante dieses Verfahrens ist in Fig. 8 dargestellt, bei der - im Gegensatz zu dem in den Figuren 6 und 7 dargestellten Verfahren - mit Metallschichten als späteren Belegungen versehene Kunststoffbänder 62 und 63 miteinander verwickelt werden und das obere Band 62 an beiden Rändern 64 und 65 mit Glattschnittkanten 58 versehen ist, während das untere Band 63 an beiden Rändern Wellenschnittkanten 57 enthält. Das obere Band 62 ist, gemessen von Wellenberg zu Wellenberg, um das Doppelte des Betrages 52 breiter als das obere Band 62, so daß im fertigen Kondensator die oben

ausführlich erläuterte seitliche Versetzung gewährleistet ist. Auch der Kondensator dieses Verfahrens weist den bei den Figuren 1, 2 und 3 erläuterten Aufbau auf.

Bezugszeichenliste

1 verfestigter Stapel
2 Belegung auf der Dielektrikumslage 4
3 Belegung auf der Dielektrikumslage 5
4 Dielektrikumslage
5 Dielektrikumslage
6 Ende des Vorsprungs 8
7 Ende des Vorsprungs 9
8 Vorsprung an der Dielektrikumslage 4
9 Vorsprung an der Dielektrikumslage 5
10 Einschnitt im verfestigten Stapel 1
11 Fläche am Ende der Vorsprünge 8 im verfestigten Stapel 1
12 Fläche am Ende der Vorsprünge 9 im verfestigten Stapel 1
13 Metallschicht auf Fläche 11
14 Metallschicht auf Fläche 12
15 metallfreier Isolierstreifen
16 metallfreier Isolierstreifen
17 Tiefe des Einschnittes 10
18 Breite des Restmetallstreifens 20 auf dem Vorsprung 8
19 Breite des Restmetallstreifens 21 auf dem Vorsprung 9
20 Restmetallstreifen
21 Restmetallstreifen
22 Breite des metallfreien Isolierstreifens 15
23 Breite des metallfreien Isolierstreifens 16
24 Stromzuführungsdraht
25 Stromzuführungsdraht
26 Längsachse des Stapels 1
27 Längsseite des Stapels 1
28 Längsseite des Stapels 1
29 obere Schmalseite des Stapels 1
30 Isolierstreifen, z. B. als metallfreie Streifen
31 Isolierstreifen, z. B. als metallfreie Streifen
32 Stromzuführung für den Einbau als Chip
33 Stromzuführung in Kappenform für den Einbau als Chip
34 oberes metallisiertes Kunststoffband
35 unteres metallisiertes Kunststoffband
36 Rand des Bandes 34
37 Rand des Bandes 35
38 gegenüberliegender Rand des Bandes 34
39 gegenüberliegender Rand des Bandes 35
40 innerer Rand des Isolierstreifens 15 bzw. 42
41 innerer Rand des Isolierstreifens 16 bzw. 43
42 Isolierstreifen auf Band 34
43 Isolierstreifen auf Band 35
44 Stirnfläche
45 Schneidlinie
46 oberes metallisiertes Band
47 unteres metallisiertes Band
48 Rand des Bandes 46 mit Glattschnitt 58
49 Rand des Bandes 46 mit Wellenschnitt 57
50 Rand des Bandes 47 mit Glattschnitt 58
51 Rand des Bandes 47 mit Wellenschnitt 57
52 Betrag der seitlichen Versetzung
53 Schneidlinie

54 Isolierstreifen auf den Bändern 46 und 47
55 Wellenberge
56 Wellentäler
57 Wellenschnittkante
58 Glattschnittkante
60 aufgeschoopte Metallschicht
61 Betrag der seitlichen Versetzung
62 oberes metallisiertes Band
63 unteres metallisiertes Band
64 Rand des oberen Bandes 62 mit Glattschnitt 58
65 Rand des oberen Bandes 62 mit Glattschnitt 58
66 Rand des unteren Bandes 63 mit Wellenschnitt 57
67 Rand des unteren Bandes 63 mit Wellenschnitt 57
68 Belegung auf dem oberen Band 62
69 Belegung auf dem unteren Band 63

## Patentansprüche

1. Elektrischer Kondensator aus einem verfestigten Stapel (1) von mit je einer Metallschicht als Belegung (2, 3) versehenen, aneinandergeschichteten Dielektrikumslagen (4, 5), bei dem die Belegungen (2, 3) von Lage zu Lage abwechselnd bis zu den Enden (6, 7) von zwei Vorsprüngen (8, 9) reichen, die durch einen Einschnitt (10) entstanden sind, der in Richtung der Dicke des Stapels (1) und etwa in der Mitte einer Seite desselben verläuft, bei dem ferner die von den Enden (6, 7) der Vorsprünge (8, 9) im verfestigten Stapel (1) gebildeten Flächen (11, 12) mit zur Kontaktierung dienenden Metallschichten (13, 14) versehen sind, die die gegenpoligen Belegungen (2, 3) miteinander verbinden mit den Merkmalen :

a) die Dielektrikumslagen (4, 5) bestehen aus Kunststoff-folien,

b) die Belegungen (2, 3) bestehen aus regenerierfähig dünnen Schichten aus Ventilmetall und bedecken je eine Fläche der Dielektrikumslagen (4, 5) praktisch bis zu den Rändern an den Längsseiten (27, 28) sowie bis zu beiden Enden (6, 7) der Vorsprünge (8, 9) und gegebenenfalls bis zum Rand der oberen Schmalseite (29) des Stapels (1), die der den Einschnitt (10) enthaltenden Schmalseite gegenüberliegt,

c) alternierend von Dielektrikumslage (4) zu Dielektrikumslage (5) sind die Vorsprünge (8, 9) mit metallfreien Isolierstreifen (15 bzw. 16) versehen, wobei die Tiefe (17) des Einschnittes (10) entweder größer ist als die Breite (18 bzw. 19) des Restmetallstreifens (20 bzw. 21) oder vorzugsweise mit den inneren Rändern (55, 56) der Isolierstreifen (15, 16) zusammenfällt oder über diese Ränder (55, 56) hinaus in den Stapel (1) hineinreicht,

d) die die gegenpoligen Belegungen (2, 3) auf den Flächen (11, 12) miteinander verbindenden Metallschichten (13, 14) sind durch Metallspritzen hergestellt.
gekennzeichnet durch die weiteren Merkmale :

e) die Enden (6, 7) der Vorsprünge (8, 9) der jeweils ersten Dielektrikumslagen (4) weisen durch Wellenschnittkanten (57) bei der Herstellung der dielektrischen Bänder, Wellenberge (55) und Wellentäler (56) auf, während die Enden (6, 7) der Vorsprünge (8, 9) der jeweils zweiten Dielektrikumslagen (5) durch Glattschnittkanten (58) begrenzt sind,

f) die Dielektrikumslagen (4, 5) sind gegeneinander derart um einen Betrag (52) seitlich versetzt, daß die Glattschnittkanten (58) der Enden (6, 7) der zweiten Dielektrikumslagen (5) etwa in der Mitte zwischen den Wellenbergen (53) und den Wellenbergen (56) der Enden (6, 7) der ersten Dielektrikumslagen (4) angeordnet sind,

g) an der oberen Schmalseite (29) des Stapels (1) weisen sowohl die ersten Dielektrikumslagen (4) als auch die zweiten Dielektrikumslagen (5) Glattschnittkanten (58) auf.

2. Elektrischer Kondensator nach Anspruch 1, dadurch gekennzeichnet, daß die Belegungen (2, 3) auf jeder oder wenigstens auf jeder zweiten Dielektrikumslage (4, 5) an der oberen Schmalseite (29) des Stapels (1) metallfreie Streifen als Isolierstreifen (30, 31) freilassen, und daß auf der Schmalseite (29) eine aufgeschoopte Metallschicht (60) enthalten ist.

3. Elektrischer Kondensator nach Anspruch 2, dadurch gekennzeichnet, daß die Dielektrikumslagen (4, 5) an der Schmalseite (29) des Stapels (1) um einen geringen Betrag (61) gegeneinander versetzt sind.

4. Verfahren zur Herstellung elektrischer Kondensatoren nach einem der Ansprüche 1 bis 3, bei dem einseitig metallisierte Bänder aus Kunststoff als Dielektrikumslagen mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, mit den Verfahrensschritten :

a) es werden metallisierte Bänder (34, 35) auf die Trommel gewickelt, die je an einem Rand (36, 37) gegebenenfalls durchgehende metallfreie Streifen (30, 31) aufweisen, während in den Bereichen der gegenüberliegenden Ränder (38, 39) und in Abständen hierzu in Wickelrichtung intermittierende metallfreie Isolierstreifen (42 bzw. 43) vor oder bei dem Aufwickeln derart erzeugt werden, daß die Isolierstreifen (42, 43) beim Aufwickeln auf die Trommel in einer Ebene senkrecht zur Wickelachse liegen und sowohl die Enden als auch die Anfänge der Isolierstreifen (42, 43) bis in den Bereich des späteren Einschnittes (10) hineinragen oder diesen Bereich geringfügig überschreiten ;

b) die Bänder (34, 35) werden beim Aufwickeln auf die Trommel so geführt, daß die Mitten der Isolierstreifen (42) des oberen Bandes (34) symmetrisch über den Mitten der Zwischenräume zwischen den Isolierstreifen (43) des unteren Bandes (35) im fertigen Mutterkondensatoren angeordnet sind,

c) nach dem Aufwickeln und Verfestigen der Ausgangskondensatoren bzw. Mutterkondensatoren wird noch auf der Trommel zumindest die aus den Rändern (38, 39) gebildete Stirnfläche (44) durch Metallspritzen mit einer Metallschicht versehen,

d) nach dem Auftrennen in einzelne Mutterkondensatoren werden senkrecht zur Wickelrichtung in der Mitte zwischen je zwei Schneidlinien (45) Einschnitte (10) erzeugt, durch deren Breite und Tiefe (17) die beiden Vorsprünge (8, 9) entstehen,

e) Abtrennen der einzelnen Kondensatoren, gegebenenfalls nach Befestigen von Stromzuführungen (24, 25, 32), durch Sägen längs von Schneidlinien (45), die durch die Mitten der Isolierstreifen (42, 43) gehen,

f) Fertigstellung der Kondensatoren durch Anbringen von kappenförmigen Stromzuführungen (33) oder von anderen Stromzuführungen (24, 25, 32), sofern diese nicht schon im Verfahrensschritt e) befestigt wurden,
dadurch gekennzeichnet, daß ein erstes metallisiertes Kunststoffband (34) mit Glattschnittkante (58) an einem Rand (36) und Wellenschnittkante (57) am gegenüberliegenden Rand (38) und ein zweites metallisiertes Kunststoffband (35) mit Glattschnittkanten (58) sowohl an einem Rand (37) als auch am gegenüberliegenden Rand (39) mit seitlicher Versetzung um einen Betrag (52) miteinander auf die Trommel gewickelt werden, der gewährleistet, daß die Glattschnittkante (58) des unteren Bandes (35) zwischen den Wellenbergen (55) und den Wellentälern (56) der Wellenschnittkante (57) am Rand (38) des oberen Bandes (34) gelangt.

5. Verfahren nach Anspruch 4, dadurch gekennzeichnet, daß auch auf die aus den Rändern (36, 37) der Bänder (34, 35) mit den Glattschnittkanten (58) entstandene Stirnfläche des Ausgangskondensators, die im fertigen Kondensator die obere Schmalseite (29) des Stapels (1) bildet, eine Metallschicht (60) aufgeschoopt wird.

6. Verfahren nach Anspruch 4 oder 5, dadurch gekennzeichnet, daß auch die Ränder (36, 37) der zu verwickelnden Kunststoffbänder (34, 35) um einen Betrag (61) versetzt geführt werden.

7. Verfahren zur Herstellung elektrischer Kondensatoren nach einem der ansprüche 1 bis 3, bei dem einseitig metallisierte Bänder aus Kunststoff als Dielektrikumslagen mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in den dazu senkrechter Richtung geteilt wird mit den Verfahrensschritten :

a) es werden metallisierte Bänder (46, 47) auf die Trommel gewickelt, die an beiden Rändern (48, 49, 50, 51) und in Abständen hierzu mit in Wickelrichtung intermittierenden metallfreien Isolierstreifen (42 bzw. 43) vor oder bei dem Aufwickeln derart versehen werden, daß die Isolierstreifen (42, 43) beim Aufwickeln auf die Trommel in einer Ebene senkrecht zur Wickelachse liegen und sowohl die Enden als auch die Anfänge der Isolierstreifen (42, 43) bis in den Bereich des späteren Einschnittes (10) hineinragen oder diesen Bereich geringfügig überschreiten,

b) die Bänder (34, 35) werden beim Aufwickeln auf die Trommel so geführt, daß die Mitten der Isolierstreifen (42) des oberen Bandes (34) symmetrisch über den Mitten der Zwischenräume zwischen den Isolierstreifen (43) des unteren Bandes (35) im fertigen Mutterkondensator angeordnet sind,

c) nach dem Aufwickeln und Verfestigen der Ausgangskondensatoren bzw. Mutterkondensatoren werden noch auf der Trommel auf beide aus den Rändern (48, 49, 50, 51) gebildete Stirnflächen durch Metallspritzen Metallschichten aufgetragen,

d) nach dem Auftrennen in einzelne Mutterkondensatoren werden senkrecht zur Wickelrichtung in der Mitte zwischen je zwei Schneidlinien (45) an beiden Seiten Einschnitte (10) erzeugt, durch deren Breite und Tiefe (17) die beiden Vorsprünge (8, 9) entstehen,

e) Abtrennen der einzelnen Kondensatoren, gegebenenfalls nach Befestigen von Stromzuführungen (24, 25, 32), durch Sägen sowohl längs von Schneidlinien (45), die durch die Mitten der Isolierstreifen (42, 43) gehen, als auch längs einer Schneidlinie (53) die parallel zu den Rändern (48, 49, 50, 51) in der Mitte des Mutterkondensators liegt,

f) Fertigstellung der Kondensatoren durch Anbringen von kappenförmigen Stromzuführungen (33) oder von anderen Stromzuführungen (24, 25, 32), sofern diese nicht schon im Verfahrensschritt e) befestigt wurden,
dadurch gekennzeichnet, daß von den zu verwickelnden metallisierten Kunststoffbändern (46, 47) das obere Band (46) an einem Rand (48) eine Glattschnittkante (58) und am gegenüberliegenden Rand (49) eine Wellenschnittkante (57) aufweist, während das untere Band (47) entgegengesetzt am Rand (51) eine Wellenschnittkante (57) und am gegenüberliegenden Rand (50) eine Glattschnittkante (58) aufweist.

8. Verfahren nach Anspruch 7, dadurch gekennzeichnet, daß die Bänder (46, 47) beim Wickeln auf die Trommel gegeneinander seitlich derart um einen Betrag (52) versetzt geführt werden, daß die jeweiligen Glattschnittkanten (58) mittig zwischen die Wellenberge (55) und Wellentäler (56) der Wellenschnittkante (57) gelagen.

9. Verfahren nach Anspruch 7 oder 8, dadurch gekennzeichnet, daß von den zu verwickelnden zu metallisierten Kunststoffbändern (62, 63) das obere Band (62) an beiden Rändern (64, 65) mit Glattschnittkanten (58) versehen ist und das untere Band (63) an beiden Rändern (66, 67) Wellenschnittkanten (57) enthält und, gemessen von Wellenberg zu Wellenberg, um das doppelte des Betrages (52) breiter ist als das obere Band (62).

## Claims

1. An electrical capacitor consisting of a consolidated stack (1) of dielectric layers (4, 5), each provided with a metal layer as coating (2, 3), where the coatings (2, 3) extend from layer to layer alternately to the ends (6, 7) of two projections (8, 9) which are formed by an indentation (10) which extends in the direction of the thickness of the stack (1) and approximately in the centre of one side thereof, where moreover the surfaces (11, 12) which are formed by the ends (6, 7) of the projections (8, 9) in the consolidated stack (1) are provided with metal layers (13, 14) which serve for contacting purposes and which interconnect the oppositely poled coatings (2, 3), comprising the following features :

a) the dielectric layers (4, 5) consist of synthetic resin films,

b) the coatings (2, 3) consist of regenerably thin layers of a metal exhibiting the valve effect and in each case cover one face of the dielectric layers (4, 5) virtually to the edges at the longitudinal sides (27, 28) and to the two ends (6, 7) of the projections (8, 9) and, if necessary, to the edge of the upper narrow side (29) of the stack (1) which lies opposite the narrow side which contains the indentation (10),

c) from dielectric layer (4) to dielectric layer (5) the projections (8, 9) are alternately provided with metal-free insulating strips (15 and 16), where the depth (17) of the indentation (10) is somewhat greater than the width (18 and 19) of the remaining metal strips (20 and 21 respectively), or preferably coincides with the inner edges (55, 56) of the insulating strips (15, 16), or extends beyond these edges (55, 56) into the stack (1),

d) the metal layers (13, 14) which interconnect the oppositely poled coatings (2, 3) on the faces (11, 12) are produced by metal spraying, characterised by the further features :

e) the ends (6, 7) of the projections (8, 9) of the respective first dielectric layers (4) are provided, by virtue of undulating cut edges (57) formed during the production of the dielectric strips, with crests (55) and troughs (56), whilst the ends (6, 7) of the projections (8, 9) of the respective second dielectric layers (5) are delimited by smooth cut edges (58),

f) the dielectric layers (4, 5) are mutually laterally offset by an amount (52) such that the smooth cut edges (58) of the ends (6, 7) of the second dielectric layers (5) are arranged approximately in the centre between the crests (53) and the troughs (56) of the ends (6, 7) of the first dielectric layers (4),

g) on the upper narrow side (29) of the stack (1), both the first dielectric layers (4) and the second dielectric layers (5) have smooth cut edges (58).

2. An electrical capacitor as claimed in Claim 1, characterised in that the coatings (2, 3) on each, or at least each second dielectric layer (4, 5) on the upper narrow side (29) of the stack (1) leave exposed metal-free strips as insulating strips (30, 31), and that a Schoop-deposited metal layer (60) is arranged on the narrow side (29).

3. An electrical capacitor as claimed in Claim 2, characterised in that the dielectric layers (4, 5) on the narrow side (29) of the stack (1) are mutually offset by a small amount (61).

4. A process for the production of electrical capacitors as claimed in one of Claims 1 to 3, in which synthetic resin strips metallised on one side, serving as dielectric layers, with a peripheral undulating cut are stacked on a drum to form a starting capacitor and the starting capacitor is divided up into the required individual capacitors at right angles to the plane of the layers where, if necessary, on a number of dielectric layers and coatings, which in each case form a parent capacitor, capacitively inactive intermediate layers are arranged and on these in turn are arranged the capacitively active dielectric layers with the coatings for the next parent capacitor, and the starting capacitor formed in this way is provided with end contact layers and is then divided up in the region of the intermediate layers and in the direction at right angles thereto, comprising the following process steps :

a) metallised ribbons (34, 35) are wound on to the drum, where said ribbons are each provided at one edge (36, 37) with possibly continuous metal-free strips (30, 31), whilst in the region of the opposite edges (38, 39) and at intervals thereto in the winding direction, intermittent metal-free insulating strips (42, 43) are produced prior to or during the winding process, in such manner that when they are wound on to the drum the insulating strips (42, 43) are arranged in a plane at right angles to the winding axis and both the ends and the beginnings of the insulating strips (42, 43) extend into the region of the later indentation (10) or extend slightly beyond this region ;

b) when they are wound on to the drum, the metallised ribbons (34, 35) are guided in such manner that the centres of the insulating strips (42) of the upper metallised ribbon (34) are arranged symmetrically above the centres of the interspaces between the insulating strips (43) of the lower metallised ribbon (35) in the finished parent capacitors,

c) following the winding and consolidation of the starting capacitors and parent capacitors while these are still on the drum, at least the end face (44) formed by the edges (38, 39) is provided with a metal layer by metal spraying,

d) following the division into individual parent capacitors, at right angles to the winding direction in the centre between two respective cutting lines (45), indentations (10) are formed whose breadth and depth (17) define the two projections (8, 9),

e) separation of the individual capacitors, where appropriate, after the attachment of current supplies (24, 25, 32), by sawing along cutting lines (45) which extend through the centres of the insulating strips (42, 43),

f) completion of the capacitors by the application of cap-shaped current supply conductors (33) or other current supply conductors (24, 25, 32), unless these have already been attached in process step e), characterized in that a first metallised synthetic resin ribbon (34) with a smooth cut edge (58) at one edge (36) and an undulating cut edge (57) at the opposite edge (38), and a second metallised synthetic resin ribbon (35) with smooth cut edges (58) both at one edge (37) and at the opposite edge (39), are wound with one another on to the drum with a lateral offset of an amount (52) which ensures that the smooth cut edge (58) of the lower metallised ribbon (35) comes to lie between the crests (55) and the troughs (56) of the undulating cut edge (57) at the edge (38) of the upper metallised ribbon (34).

5. A process as claimed in Claim 4, characterised in that a metal layer (60) is also Schoopdeposited on to the end face of the starting capacitor, which is formed from the edges (36, 37) of the metallised strips ( 34, 35) with the smooth cut edges (58) and which in the finished capacitor forms the upper narrow side (29) of the stack (1).

6. A process as claimed in Claim 4 or 5, characterised in that the boundaries (36, 37) of the synthetic resin ribbons (34, 35) which are to be wound are likewise guided so as to be offset by an amount (61).

7. A process for the production of electrical capacitors as claimed in one of Claims 1 to 3 in which synthetic resin strips metallised on one side, serving as dielectric layers with a peripheral undulating cut, are stacked on to a drum to form a starting capacitor, and the starting capacitor is divided up into the required individual capacitors at right angles to the plane of the layers where, if required, on a number of dielectric layers and coatings which in each case form a parent capacitor there are arranged capacitively inactive intermediate layers and on these in turn the capacitively active dielectric layers with the coatings for the next parent capacitor, and the starting capacitor formed in this way is provided with end contact layers and then divided up in the region of the intermediate layers and in the direction at right angles thereto, comprising the following process steps :

a) metallised ribbons (46, 47) are wound on to the drum, which at both edges (48, 49, 50, 51) and at intervals thereto are provided with intermittent metal-free insulating strips (42 and 43) in the winding direction either prior to or during the winding process, in such manner that when they are wound on to the drum the insulating strips (42, 43) are located in a plane at right angles to the winding axis, and both the ends and the beginnings of the insulating strips (42, 43) project into the region of the later indentation (10) or extend slightly beyond this region,

b) when they are wound on to the drum the metallised ribbons (34, 35) are guided in such manner that the centres of the insulating strips (42) of the upper metallised ribbon (34) are arranged symmetrically above the centres of the interspaces between the insulating strips (43) of the lower metallised ribbon (35) in the finished parent capacitor,

c) following the winding and consolidation of the starting capacitors and parent capacitors, whilst these remain on the drum, metal layers are applied by metal spraying to the two end faces formed by the edges (48, 49, 50, 51),

d) following the division into individual parent capacitors, at right angles to the winding direction in the centre between two respective cutting lines (45) on both sides, indentations (10) are produced whose breadth and depth (17) define the two projections (8, 9),

e) separation of the individual capacitors, if necessary after the attachment of current supply conductors (24, 25, 32), by sawing both along cutting lines (45) which pass through the centres of the insulating strips (42, 43), and along a cutting line (53) which extends parallel to the edges (48, 49, 50, 51) in the centre of the parent capacitor,

f) completion of the capacitors by the application of cap-shaped current supply conductors (33), or other current supplies (24, 25, 32), unless these have already been attached in process step e),

characterised in that of the metallised synthetic resin ribbons (46, 47) which are to be wound, the upper ribbon (46) is provided with a smooth cut edge (48) at one edge and with an undulating cut edge (57) at the opposite edge (49), whilst in contrast the lower ribbon (47) has an undulating cut edge (57) at the edge (51) and a smooth cut edge (58) at the opposite edge (50).

8. A process as claimed in Claim 7, characterised in that when they are wound on to the drum the metallised ribbons (46, 47) are guided with a mutual lateral offset by an amount (52) such that the respective smooth cut edges (58) come to lie centrally between the crests (55) and troughs (56) of the undulating cut edge (57).

9. A process as claimed in Claim 7 or 8, characterised in that of the synthetic resin ribbons (62, 63) to be wound, the upper ribbon (62) is provided with smooth cut edges (58) at both edges (64, 65) and the lower ribbon (63) is provided with undulating cut edges (57) at both edges (66, 67), and, measured from crest to crest, exceeds the width of the upper ribbon (62) by double the amount (52).

## Revendications

1. Condensateur électrique constitué par un empilage consolidé (1) de couches diélectriques (4,5) disposées les unes contre les autres et comportant respectivement une couche métallique formant armature (2,3) et dans lequel les armatures (2,3) s'étendent en alternance, d'une couche à la suivante, jusqu'aux extrémités (6,7) de deux parties saillantes (8,9) formées par suite de la présence d'une découpe (10) qui s'étend dans la direction en épaisseur de l'empilage (1) et approximativement dans la partie médiane d'une face de cet empilage, et dans lequel, en outre, les surfaces (11,12) formées par les extrémités (6,7) des parties saillantes (8,9) dans l'empilage consolidé (1), sont munies de couches métalliques (13,14) utilisées pour l'établissement des contacts et reliant entre elles les armatures (2,3) possédant des polarités opposées, et comportant les caractéristiques suivantes :

a) les couches diélectriques (4,5) sont constituées par des feuilles en matière plastique,

b) les armatures (2,3) sont constituées par des couches minces régénérables constituées par un métal pour valve et recouvrent chacune une surface des couches diélectriques (4,5) pratiquement jusqu'aux bords, au niveau des côtés longitudinaux (27,28) et jusqu'aux deux extrémités (6,7) des parties saillantes (8,9) et éventuellement jusqu'au bord du petit côté supérieur (29) de l'empilage (1), qui est situé à l'opposé du petit côté contenant la découpe (10),

c) les parties saillantes (8,9) comportent, en alternance, d'une couche diélectrique (4) à la couche diélectrique (5), des zones isolantes en forme de rubans (15 ou 16) exemptes de métal, la profondeur (17) de la découpe (10) étant supérieure à la largeur (18 ou 19) de la zone métallique résiduelle en forme de ruban (20 ou 21) ou de préférence à la profondeur des bords intérieurs (55,56) des zones isolantes en forme de rubans (15,16) ou supérieure à la profondeur de ces bords (55,56) dans l'empilage,

d) les couches métalliques (13,14), qui relient entre elles les armatures (2,3) possédant des polarités opposées et situées sur les surfaces (11,12), sont fabriquées par métallisation par projection ;

remarquable par les caractéristiques supplémentaires :

e) les extrémités (6,7) des parties saillantes (8,9) des premières couches électriques respectives (4) comportent, par suite de la présence d'arêtes de coupe ondulées (57), lors de la fabrication des bandes diélectriques, des sommets (55) et des creux (56), tandis que les extrémités (6,7) des parties saillantes (8,9) des secondes couches diélectriques respectives (5) sont limitées par des arêtes de coupe rectilignes (58),

f) les couches diélectriques (4,5) sont décalées latéralement les unes par rapport aux autres d'une distance (52) telle que les arêtes de coupe rectilignes (58) des extrémités (6,7) des secondes couches diélectriques (5) sont disposées approximativement dans la zone médiane entre les sommets (53) et les creux (56) des extrémités (6,7) des premières couches diélectriques (4),

g) au niveau du petit côté supérieur (29) de l'empilage (1), aussi bien la première couche diélectrique (4) que la seconde couche diélectrique (5) comportent des arêtes de coupe rectilignes (58).

2. Condensateur électrique suivant la revendication 1, caractérisé par le fait que les armatures (2,3) laissent subsister dans chaque couche diélectrique (4,5) ou au moins dans une couche diélectrique (4,5) sur deux, au niveau du petit côté (29) de l'empilage (1), des zones en forme de rubans exemptes de métal en tant que zones isolantes en forme de rubans (30, 31) et qu'il est prévu une couche métallique (60) déposée par schoopage.

3. Condensateur électrique suivant la revendication 2, caractérisé par le fait que les couches diélectriques (4,5) sont décalées réciproquement d'une faible distance (61), au niveau du petit côté (29) de l'empilage (1).

4. Procédé pour fabriquer des condensateurs électriques suivant l'une des revendications 1 à 3, selon lequel on superpose, sur un tambour, des bandes en matière plastique, dont une face est métallisée, en tant que couches diélectriques possédant un bord latéral découpé avec une forme ondulée, pour former un condensateur initial et on subdivise le condensateur initial perpendiculairement aux plans des couches, pour obtenir les condensateurs individuels désirés, auquel cas on dispose éventuellement des couches intercalaires n'ayant aucune action capacitive sur un certain nombre de couches diélectriques et d'armatures constituant respectivement un condensateur mère et à nouveau, par-dessus ces couches intercalaires, des couches diélectriques ayant une action capacitive et comportant des armatures pour le condensateur mère suivant, et on équipe avec des couches de contact frontales le condensateur initial ainsi obtenu et on le subdivise ensuite dans la zone des couches intercalaires, dans une direction perpendiculaire à ces couches, incluant les étapes opératoires suivantes :

a) on enroule, sur le tambour, des bandes métallisées (34,35), qui comportent respectivement sur un bord (36,37), des zones en forme de rubans (30,31) exemptes de métal, éventuellement continues, tandis que dans les zones des bords opposés (38,39) et à distance de ces dernières, dans la direction d'enroulement, on aménage des zones isolantes en forme de rubans (42 ou 43) exemptes de métal alternantes, avant ou lors de l'enroulement, de telle sorte que ces zones isolantes en forme de rubans (42, 43) sont situées dans un plan perpendiculaire à l'axe d'enroulement lors de l'enroulement sur le tambour et qu'aussi bien les extrémités que les départs des zones isolantes en forme de rubans (42,43) s'étendent jusque dans la zone de la découpe (10) obtenue ultérieurement ou s'étendent légèrement au-delà de cette zone ;

b) lors de l'enroulement sur le tambour on guide les bandes (34,35) de manière que les centres des zones isolantes en forme de rubans (42) de la bande supérieure (34) soient disposés symétriquement au-dessus des centres des espaces intercalaires entre les zones isolantes en forme de rubans (43) de la bande inférieure (35) dans le condensateur mère terminé,

c) après l'enroulement et la consolidation des condensateurs de départ ou des condensateurs mères, on applique une couche métallique par métallisation par projection sur au moins la surface frontale (44) formée par les bords (38,39), alors que les condensateurs sont encore sur le tambour,

d) après la subdivision en condensateurs mères individuels, on forme, perpendiculairement à la direction d'enroulement et dans la zone médiane entre deux lignes de coupe respectives (45), des découpes (10) qui, avec leur largeur et leur profondeur (17), font apparaître les deux parties saillantes (8,9),

e) on subdivise les condensateurs individuels, éventuellement après fixation d'organes (24,25,32) d'alimentation en courant, par sciage le long de lignes de coupe (45) qui passent par les centres des zones isolantes en forme de rubans (42,43),

f) on achève la fabrication du condensateur en mettant en place des éléments (33) d'alimentation en courant, en forme de capuchons ou bien d'autres éléments (24,25,32) d'alimentation en courant, dans la mesure où ces derniers n'ont pas déjà été fixés lors de l'étape opératoire e), caractérisé par le fait qu'on enroule sur le tambour une première bande en matière plastique métallisée (34) possédant une arête de coupe rectiligne (58) au niveau d'un bord (36) et une arête de coupe ondulée (57) au niveau du bord opposé (38) et une seconde bande en matière plastique métallisée (35) possédant des arêtes de coupe rectilignes (58) aussi bien au niveau d'un bord (37) qu'au niveau du bord opposé (39), avec un décalage réciproque correspondant à une valeur (52) garantissant que l'arête de coupe rectiligne (58) de la bande inférieure (35) parvient entre les sommets (55) et les creux (56) de l'arête de coupe ondulée (57) prévue sur le bord (38) de la bande supérieure (34).

5. Procédé selon la revendication 4, caractérisé en ce qu'on dépose par schoopage une couche métallique (60) également sur la surface frontale du condensateur de départ, qui est formé par les bords (36,37) des bandes (34,35) possédant les arêtes de coupe rectilignes (58) et forme, lorsque le condensateur est terminé, le petit côté supérieur (29) de l'empilage (1).

6. Procédé suivant la revendication 4 ou 5, caractérisé par le fait qu'on dispose également les bords (36, 37) des bandes en matière plastique (34,35) devant être enroulées, en les décalant d'une distance (61).

7. Procédé pour fabriquer des condensateurs électriques suivant l'une des revendications 1 à 3, selon lequel on superpose, sur un tambour, des bandes en matière plastique, dont une face est métallisée, en tant que couches diélectriques possédant un bord latéral découpé avec une forme ondulée, pour former un condensateur initial et on subdivise le condensateur initial perpendiculairement aux plans des couches, pour obtenir les condensateurs individuels désirés, auquel cas on dispose éventuellement des couches intercalaires n'ayant aucune action capacitive sur un certain nombre de couches diélectriques et d'armatures constituant respectivement un condensateur mère et à nouveau, par-dessus ces couches intercalaires, des couches diélectriques ayant une action capacitive et comportant des armatures pour le condensateur mère suivant, et on équipe de couches de contact frontales le condensateur initial ainsi obtenu et on le subdivise ensuite dans la zone des couches intercalaires, dans une direction perpendiculaire à ces couches, incluant les étapes opératoires suivantes :

a) on enroule, sur le tambour, des bandes métallisées (46,47), et on prévoit au niveau des deux bords (48,49,50,51) et à distance de ces derniers, deux zones isolantes en forme de rubans (42 ou 43) exemptes de métal et disposées d'une manière alternée dans la direction d'enroulement, avant ou pendant l'enroulement, de telle sorte que lors de l'enroulement sur le tambour, les zones isolantes en forme de rubans (42,43) sont situées dans un plan perpendiculaire à l'axe de l'enroulement et qu'aussi bien les extrémités que les débuts des zones isolantes en forme de rubans (42,43) s'étendent jusque dans la zone de la découpe (10) formée ultérieurement ou s'étendent légèrement au-delà de cette zone,

b) lors de l'enroulement sur le tambour on guide les bandes (34,35) de manière que les centres des zones isolantes en forme de rubans (42) de la bande supérieure (34) soient disposés symétriquement au-dessus des centres des espaces intercalaires entre les zones isolantes en forme de rubans (43) de la bande inférieure (35) dans le condensateur mère terminé,

c) après l'enroulement et la consolidation des condensateurs de sortie ou des condensateurs mères, on dépose, encore sur le tambour, des couches métalliques par métallisation par projection sur les deux surfaces frontales formées par les bords (48,49,50,51),

d) après la subdivision en condensateurs mères individuels, on forme, perpendiculairement à la direction d'enroulement et dans la zone médiane entre deux lignes de coupe respectives (45), des découpes (10) qui, avec leur largeur et leur profondeur (17), font apparaître les deux parties saillantes (8,9),

e) on sépare les condensateurs individuels, éventuellement après fixation d'éléments (24,25,32) d'alimentation en courant, par sciage

aussi bien le long de lignes de coupe (45) qui passent par les centres des feuilles isolantes (42,43), que le long d'une ligne de coupe (53) parallèle aux bords (48,49,50,51) et située dans la zone médiane du condensateur mère,

f) on achève la fabrication du condensateur en mettant en place des éléments (33) d'alimentation en courant, en forme de capuchons ou bien d'autres éléments (24,25,32) d'alimentation en courant, dans la mesure où ces derniers n'ont pas déjà été fixés lors de l'étape opératoire e), caractérisé par le fait que parmi les bandes en matière plastique métallisées (46,47) devant être enroulées, la bande supérieure (46) comporte une arête de coupe rectiligne (58) au niveau d'un bord (48) et une arête de coupe ondulée (57) au niveau du bord opposé (49), tandis que la bande inférieure (47) possède au contraire une arête de coupe ondulée (57) au niveau du bord (51) et une arête de coupe rectiligne (58) au niveau du bord opposé (50).

8. Procédé suivant la revendication 7, caractérisé par le fait que lors de l'enroulement sur le tambour, on dispose les bandes (46,47) en les décalant latéralement l'une par rapport à l'autre d'une distance (52) telle que les arêtes de coupe rectilignes respectives (58) se situent dans les zones médianes entre les sommets (55) et les creux (56) de l'arête de coupe ondulée (57).

9. Procédé suivant la revendication 7 ou 8, caractérisé par le fait que parmi les bandes en matière plastique devant être métallisées et enroulées (62,63), la bande supérieure (62) comporte, au niveau de ses deux bords (64,65), des arêtes de coupe rectilignes (58) et que la bande inférieure (63) comporte, au niveau de ses deux bords (66,67), des arêtes de coupe ondulées (57) et est plus large que la bande supérieure (62), d'une valeur double de la distance (52) mesurée entre deux sommets consécutifs.

# FIG 1

# FIG 2

FIG 3

FIG 4

FIG 5

FIG 6

## FIG 7

## FIG 8